# DEMANDE DE BREVET EUROPEEN

(11) **EP 0 562 951 A1**
(43) Date de publication de la demande: **29.09.1993**
(21) Numéro de dépôt: 93400750.1
(22) Date de dépôt: 23.03.1993
(51) Int. Cl.: B32B 17/10

(54) **Vitres de sécurité en verre feuilleté ; leurs procédés de fabrication**

(30) Priorité: 26.03.1992 FR 9203663
(71) Demandeur: VERTAL NORD EST, F-69800 Saint-Priest (FR)
(72) Inventeur: Deprez, Jean-Pierre, F-69330 Meyzieu (FR); de la Rochefoucauld, Christian, F-69002 Lyon (FR)
(74) Mandataire: Picard, Jean-Claude Georges

(57) **Abrégé**

Vitre de sécurité en verre feuilleté, du type comportant deux glaces en verre recuit ou trempé 1, 2 reliées l'une à l'autre par une feuille de matière synthétique intercalaire 3 sur les faces opposées de laquelle lesdites glaces sont adhérisées, caractérisée en ce que ladite feuille comporte dans ladite matière une ligne 4 de discontinuité de résistance mécanique de relativement faible largeur, cette ligne définissant un contour de préouverture d'une superficie telle qu'après bris desdites glaces 1, 2 et rupture selon ledit contour, il offre un passage suffisant pour un corps humain.

L'invention concerne aussi des procédés de fabrication de telles vitres.

## Description

La présente invention concerne des vitres de sécurité en verre feuilleté, ainsi que leurs procédés de fabrication.

Il pourra s'agir en particulier de vitres de sécurité pour voitures de chemin de fer.

On sait que sur les véhicules destinés au transport de voyageurs on utilise de plus en plus fréquemment des vitres en verre feuilleté, c'est-à-dire du type comportant deux glaces en verre recuit, durci ou trempé reliées l'une à l'autre par une feuille de matière synthétique intercalaire sur les faces opposées de laquelle lesdites glaces sont adhérisées. En cas de choc, ces vitres résistent beaucoup mieux que les vitres en verre trempé non feuilleté, car après fragmentation les parcelles de verre conservent leur cohésion, grâce à la feuille intercalaire adhérisée entre les deux glaces. Cela évite que les fragments de verre ne soient projetés sur les voyageurs, en risquant de leur causer de graves blessures.

Cependant ce progrès indéniable apporté par le verre feuilleté entraîne en contrepartie un inconvénient : en cas d'accident ou d'incendie il est nécessaire que les voyageurs puissent s'évacuer très rapidement, et donc qu'ils aient la possibilité de s'échapper très vite par les baies, surtout si les portes sont bloquées. Le verre feuilleté de ces baies offre alors un obstacle à cette évacuation rapide, précisément en raison de sa grande résistance aux chocs, et ceci même lorsque les deux glaces de la vitre ont été fragmentées ; on a constaté qu'il fallait généralement plus d'une minute, à l'aide d'une masse ou analogue, pour briser une telle vitre et y ménager un espace suffisant pour le passage d'une personne.

Le but de l'invention est de résoudre ce problème.

A cet effet, une vitre de sécurité en verre feuilleté du type mentionné au début est, conformément à la présente invention, caractérisée en ce que ladite feuille comporte dans ladite matière une ligne de discontinuité de résistance mécanique de relativement faible largeur, cette ligne définissant un contour de préouverture d'une superficie telle qu'après bris desdites glaces et rupture selon ledit contour, il offre un passage suffisant pour un corps humain.

On comprend que cette ligne de discontinuité dans la feuille de matière synthétique supprime localement la cohésion des parcelles de verre dans les deux glaces après leur éclatement, ce qui permettra de pratiquer rapidement dans la vitre, à l'aide de l'outil de secours habituel, une ouverture de largeur suffisante pour l'extraction des voyageurs, ouverture définie par le susdit "contour de préouverture".

Bien entendu, il peut se faire que la vitre ne soit aucunement endommagée par suite de l'accident qui entraîne la nécessité d'évacuer rapidement les voyageurs. Dans ce cas, ils auront à briser totalement les deux glaces. Pour leur faciliter cette opération, on prévoit que ladite feuille intercalaire comporte en outre au moins une zone ponctuelle de discontinuité de résistance mécanique dans ladite matière, désignée comme zone d'impact pour une masse ou outil de secours analogue, propre à faciliter le bris d'une desdites glaces à travers l'autre glace.

Après bris de la première glace, par exemple de la glace intérieure par un voyageur (ou de la glace extérieure par un secouriste), il sera facile, à l'aide de la masse ou analogue, de briser l'autre glace en frappant sur ladite zone ponctuelle, qui devra avoir, pour cela, une résistance aux chocs beaucoup plus faible que celle de la matière synthétique constituant ladite feuille intercalaire. Le bris des deux glaces étant ainsi obtenu (leur cohésion subsistant cependant), d'autres coups de masse à l'intérieur du contour de préouverture susdéfini permettront rapidement d'obtenir dans la vitre, après rupture selon ladite ligne de discontinuité, un passage suffisant à l'évacuation des voyageurs.

On a constaté qu'une vitre de sécurité ainsi constituée pouvait être ouverte de cette manière en environ 30 secondes, ce qui constitue un progrès considérable sur les vitres antérieurement connues.

Il résulte donc de ce qui précède qu'une vitre conforme à l'invention peut encore être caractérisée en ce que lesdites ligne et/ou zone de discontinuité dans ladite feuille intercalaire ont une dureté notablement moindre que celle de ladite matière synthétique constituant cette feuille.

La ligne de discontinuité dans la matière synthétique de la feuille intercalaire peut avoir un tracé quelconque, par exemple circulaire, ovale, etc. Elle peut s'étendre aussi seulement selon les trois côtés d'un rectangle, car le quatrième côté (imaginaire) de ce rectangle sera alors suffisamment fragilisé, constituant automatiquement une ligne de rupture lorsqu'un choc sera appliqué à l'intérieur du contour de préouverture.

Selon un mode de réalisation, ladite ligne de discontinuité dans la matière synthétique est une ligne interrompue, à savoir une ligne constituée de zones consécutives dans lesquelles ladite matière synthétique constituant ladite feuille est alternativement présente et absente.

Ceci peut être réalisé notamment dans une vitre du type dans lequel ladite feuille intercalaire de matière synthétique est élaborée par coulée et polymérisation in situ entre lesdites glaces. Cette vitre peut alors être caractérisée en ce que ladite ligne de discontinuité est constituée grâce à des portions de ruban, adhésif sur ses deux faces, d'épaisseur sensiblement égale à celle de ladite feuille. Entre ces portions de ruban adhésif seront de la sorte ménagés pour la matière synthétique, lors de sa coulée entre les deux glaces, des passages lui permettant d'occuper tout l'espace intercalaire, en évitant par conséquent les bulles d'air. Le grand intérêt de ce mode de réalisation réside également dans le fait que les portions de ruban adhésif maintiendront fermement un espacement d'épaisseur constante entre les deux glaces, cet espace n'étant alors que très peu déformé par la pression hydrostatique lors de la coulée de la matière synthétique entre les deux glaces. Ainsi les deux glaces resteront parfaitement parallèles l'une à l'autre, ce qui est une nécessité du point de vue de l'optique.

De préférence, et de manière en soi connue, ladite matière synthétique constituant la feuille est une résine synthétique transparente du genre monomère acrylique ou analogue, polymérisable aux ultra-violets, une telle résine à haute résistance mécanique constituant en même temps un excellent isolant acoustique. Quant au ruban adhésif précité, il sera avantageusement constitué d'une mousse de polyéthylène ou analogue, recouverte sur ses deux faces d'une couche adhésive à très- forte adhésivité. Le fait d'utiliser ici une mousse permettra de limiter les forces d'arrachement à l'interface entre les glaces et les portions de ruban adhésif lors de la coulée de la matière synthétique entre les glaces, puisque la mousse pourra se distendre légèrement sous l'effet de la pression hydrostatique qui tend à écarter légèrement les deux glaces l'une de l'autre.

L'invention peut encore être réalisée avec un autre type de vitre, à savoir avec une vitre du type dans lequel ladite feuille intercalaire de matière synthétique est constituée d'un adhésif double face laminé entre lesdites glaces.

Cette vitre pourra alors être caractérisée en ce que ladite ligne de discontinuité dans ladite matière est constituée par une ligne de découpe pratiquée dans ladite feuille, selon ledit contour de préouverture souhaité. Là encore, par conséquent, il y aura une absence localisée de matière synthétique dans la feuille intercalaire, la ligne de discontinuité précitée pouvant dans ce cas être une ligne continue, c'est-à-dire une ligne, encore de largeur relativement faible, selon laquelle l'absence de matière synthétique confère à la feuille intercalaire (comme dans le cas précédent à ruban adhésif) une discontinuité de résistance mécanique.

Dans ce mode de mise en oeuvre, et là encore de façon en soi connue, on prévoit avantageusement que ladite matière synthétique est constituée par un polyvinyle de butyral (PVB) ou analogue.

Quant à la zone ponctuelle de discontinuité, elle pourra dans tous les cas, et de façon analogue, être vide de toute matière, ou occupée par une pastille de matière à faible dureté.

L'invention porte encore sur les procédés de fabrication des vitres qui viennent d'être définies.

Dans le cas des vitres à feuille intercalaire coulée et polymérisée in situ, le procédé peut être caractérisé en ce que l'on colle sur l'une desdites glaces des portions de ruban, adhésif sur ses deux faces, selon ledit contour de préouverture souhaité, en ce que l'on applique l'autre glace vis-à-vis de la précédente en la pressant contre lesdites portions de ruban, en ce que l'on coule ladite matière synthétique dans l'espace ainsi ménagé par lesdites portions de ruban entre lesdites glaces, après avoir assuré l'étanchéité sur les bords autres que ceux définissant l'ouverture d'introduction de ladite matière, et en ce que ladite matière ainsi coulée entre les deux glaces est finalement polymérisée in situ.

Dans le cas des vitres à feuille intercalaire laminée entre les deux glaces, le procédé peut être caractérisé en ce que l'on colle sur l'une desdites glaces une feuille de matière synthétique constituant un adhésif double face, en ce que l'on pratique dans cette feuille une ligne de découpe selon ledit contour de préouverture souhaité pour retirer une certaine largeur de ladite matière, et en ce que l'on pose l'autre glace sur ladite feuille ainsi découpée, l'ensemble étant ensuite laminé et étuvé.

La feuille de matière synthétique peut être découpée au préalable. Dans ce cas, un autre procédé conforme à l'invention se caractérise en ce que l'on pratique dans une feuille de matière synthétique constituant un adhésif double face, une ligne de découpe selon ledit contour de préouverture souhaité pour retirer une certaine largeur de ladite matière, en ce que l'on colle cette feuille sur l'une desdites glaces, et en ce que l'on pose l'autre glace sur ladite feuille ainsi découpée, l'ensemble étant ensuite laminé et étuvé.

Deux modes d'exécution de l'invention vont maintenant être décrits à titre d'exemples nullement limitatifs, avec référence aux figures du dessin ci-annexé dans lequel :
- la figure 1 montre en perspective la préparation de deux glaces avant élaboration de la feuille intercalaire en matière synthétique par coulée, cette coulée étant montrée en perspective à la figure 2 ;
- la figure 3 montre la vitre en verre feuilleté ainsi obtenue ;
- la figure 4 montre en perspective la préparation de deux glaces, avec collage sur l'une d'elles d'une feuille intercalaire de matière synthétique découpée ; et
- la figure 5 montre une vitre conforme à l'invention après cassure selon la ligne de préouverture.

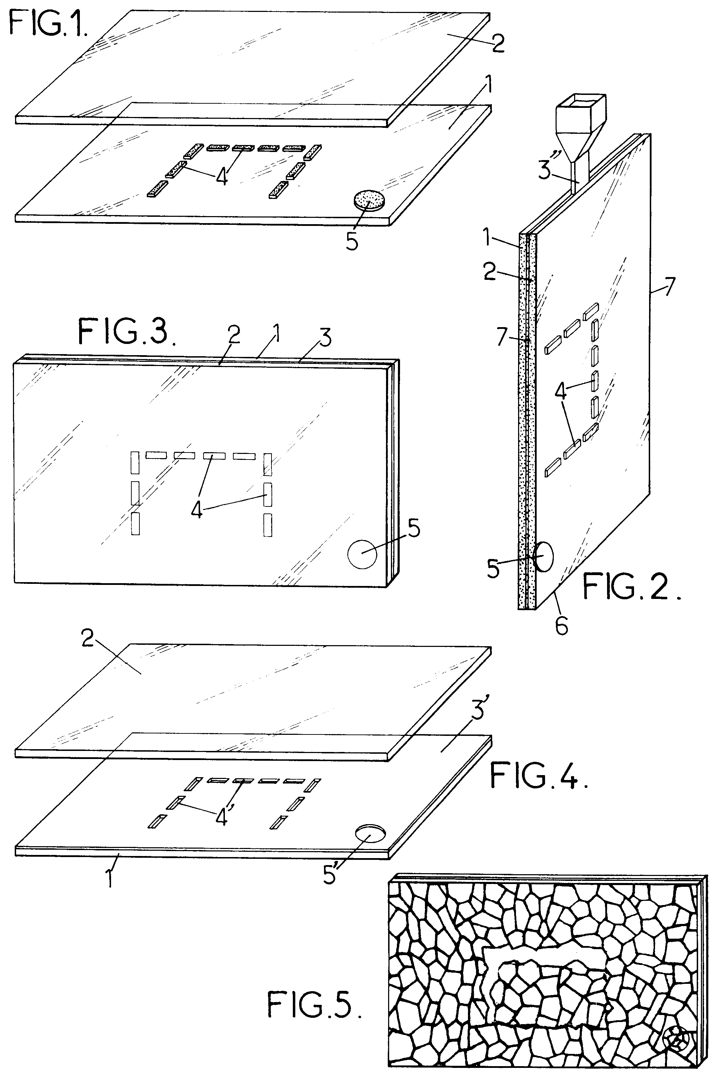

Sur les figures 1 à 3, les deux glaces ont été référencées 1 et 2, et la feuille intercalaire a été référencée 3.

Sur la glace 1 on colle des morceaux de ruban adhésif 4, par exemple en mousse de polyéthylène, à forte adhésivité. Ces morceaux sont disposés selon ce que l'on a appelé plus haut le contour de préouverture, lequel est dans l'exemple rectangulaire, mais pourrait avoir toute autre forme propre à laisser passage à un corps humain. Dans un coin de la glace 1, on colle également une pastille adhésive 5, éventuellement aussi en mousse de polyéthylène, pour constituer la zone ponctuelle de discontinuité. La pastille 5 a la même épaisseur que les morceaux de ruban 4, par exemple 1,6 mm, qui est une épaisseur courante pour la feuille intercalaire.

Les deux glaces étant appliquées l'une contre l'autre, avec interposition des éléments 4 et 5, on les place dans la position verticale de la figure 2 et on assure l'étanchéité au niveau des bords inférieur 6 et latéraux 7, par exemple à l'aide de rubans adhésifs ou de tout autre moyen. On peut alors couler dans l'espace ménagé entre les deux glaces la résine synthétique 3'', par exemple un monomère acrylique ou analogue. Les deux glaces étant fortement solidarisées par les éléments adhésifs 4 et 5 ne s'écartent que très peu l'une de l'autre, comme déjà mentionné plus haut. Après avoir évacué les bulles d'air en partie supérieure de la coulée, on peut procéder à la polymérisation de la résine, ce qui permet d'obtenir la vitre de la figure 3, avec ses inserts 4 et 5, noyés dans la masse de la résine 3'', constituant alors la feuille intercalaire 3. La zone ponctuelle correspondant à la pastille 5 peut être colorée ou imprimée, par exemple par sérigraphie, pour la désigner à l'attention des voyageurs.

En cas de nécessité, les voyageurs peuvent rapidement s'évacuer par une baie équipée d'une telle vitre. Il leur suffit de provoquer successivement la fragmentation des deux glaces 2 et 1 (la glace 2 étant supposée être la glace intérieure) en frappant avec une masse sur la zone 5, qui n'offre que peu de résistance lorsque la première glace est brisée. Ensuite, quelques coups de masse dans la partie centrale, à l'intérieur du contour de préouverture défini par les inserts 4, suffisent à la détacher du reste de la vitre, et à obtenir dans celle-ci un passage d'évacuation pour les passagers (voir figure 5). Ces opérations peuvent être réalisées en moins de 30 secondes.

La figure 4 montre un autre procédé, dans lequel la feuille intercalaire 3' est constituée par un film adhésif sur ses deux faces (par exemple en PVB), appliqué sur la glace 1, et dans lequel sont pratiquées des découpes 4' et 5', lesquelles peuvent avoir les mêmes dispositions et dimensions que les éléments 4 et 5 du mode de réalisation précédent. Comme on l'a mentionné plus haut, ces découpes dans la feuille intercalaire 3' peuvent être effectuées, par tout moyen approprié, par exemple grâce à un faisceau LASER, avant ou après application sur l'une des glaces. Après application de la seconde glace, laminage et étuvage, on obtient une vitre semblable à celle de la figure 3, sauf que les inserts 4 et 5 en mousse ou analogue peuvent être remplacés ici par des parties vides de matière, correspondant aux découpes 4' et 5'. On peut noter cependant que ces parties évidées ou découpes de la feuille de PVB ou analogue peuvent aussi être emplies d'un matériau différent à faible dureté, éventuellement coloré, par exemple une mousse de polyéthylène, qui éviterait le risque de fluage ultérieur des bords de ces découpes, pouvant nuire à leur aspect.

La vitre ainsi obtenue, avec ou sans ce remplissage, présente sensiblement les mêmes caractéristiques que celle de l'exemple précédent, en tant que vitre apte à être rapidement transformée en issue de secours dans un véhicule ferroviaire ou autre.

## Revendications

1. Vitre de sécurité en verre feuilleté, du type comportant deux glaces en verre recuit, durci ou trempé (1, 2) reliées l'une à l'autre par une feuille de matière synthétique intercalaire (3) sur les faces opposées de laquelle lesdites glaces sont adhérisées, caractérisée en ce que ladite feuille comporte dans ladite matière une ligne (4) de discontinuité de résistance mécanique de relativement faible largeur, cette ligne définissant un contour de préouverture d'une superficie telle qu'après bris desdites glaces (1, 2) et rupture selon ledit contour, il offre un passage suffisant pour un corps humain.

2. Vitre selon la revendication 1, caractérisée en ce que ladite feuille intercalaire (3) comporte en outre au moins une zone ponctuelle (5) de discontinuité de résistance mécanique dans ladite matière, désignée comme zone d'impact pour une masse ou outil de secours analogue, propre à faciliter le bris d'une desdites glaces à travers l'autre glace.

3. Vitre selon la revendication 1 ou 2, caractérisée en ce que lesdites ligne et/ou zone de discontinuité dans ladite feuille intercalaire (3) ont une dureté notablement moindre que celle de ladite matière synthétique constituant cette feuille.

4. Vitre selon l'une quelconque des revendications 1 à 3, caractérisée en ce que ladite ligne (4) de discontinuité dans ladite matière synthétique s'étend selon les trois côtés d'un rectangle.

5. Vitre selon l'une quelconque des revendications précédentes, caractérisée en ce que ladite ligne (4) de discontinuité dans la matière synthétique est une ligne interrompue, à savoir une ligne constituée de zones consécutives dans lesquelles ladite matière synthétique constituant ladite feuille est alternativement présente et absente.

6. Vitre selon la revendication 5, du type dans lequel ladite feuille intercalaire (3) de matière synthétique est élaborée par coulée et polymérisation in situ entre lesdites glaces, caractérisée en ce que ladite ligne de discontinuité est constituée grâce à des portions (4) de ruban, adhésif sur ses deux faces, d'épaisseur sensiblement égale à celle de ladite feuille.

7. Vitre selon l'une quelconque des revendications précédentes, caractérisée en ce que ladite matière synthétique constituant la feuille (3) est une résine synthétique (3'') transparente du genre monomère acrylique ou analogue, polymérisable aux ultra-violets.

8. Vitre selon la revendication 6 ou 7, caractérisée en ce que ledit ruban adhésif (4) est constitué d'une mousse de polyéthylène ou analogue, recouverte sur ses deux faces d'une couche adhésive à très forte adhésivité.

9. Vitre selon l'une quelconque des revendications 1 à 5, du type dans lequel ladite feuille intercalaire de matière synthétique est constituée d'un adhésif double face (3') laminé entre lesdites glaces, caractérisée en ce que ladite ligne de discontinuité dans ladite matière est constituée par une ligne de découpe (4') pratiquée dans ladite feuille, selon ledit contour de préouverture souhaité.

10. Vitre selon la revendication 9, caractérisée en ce que ladite matière synthétique (3') est constituée par un polyvinyle de butyral (PVB) ou analogue.

11. Vitre selon l'une quelconque des revendications 2 à 10, caractérisée en ce que ladite zone ponctuelle de discontinuité (5') est vide de toute matière, ou est occupée par une pastille de matière à faible dureté (5).

12. Procédé de fabrication d'une vitre conforme à l'une quelconque des revendications 1 à 8, caractérisé en ce que l'on colle sur l'une (1) desdites glaces des portions (4) de ruban, adhésif sur ses deux faces, selon ledit contour de préouverture souhaité, en ce que l'on applique l'autre glace (2) vis-à-vis de la précédente en la pressant contre lesdites portions de ruban, en ce que l'on coule ladite matière synthétique (3'') dans l'espace ainsi ménagé par lesdites portions de ruban entre lesdites glaces, après avoir assuré l'étanchéité sur les bords (6, 7) autres que ceux définissant l'ouverture d'introduction de ladite matière, et en ce que ladite matière ainsi coulée (3'') entre les deux glaces (1, 2) est finalement polymérisée in situ.

13. Procédé de fabrication d'une vitre conforme à l'une quelconque des revendications 9 à 11, caractérisé en ce que l'on colle sur l'une (1) desdites glaces une feuille de matière synthétique (3') constituant un adhésif double face, en ce que l'on pratique dans cette feuille une ligne de découpe (4') selon ledit contour de préouverture souhaité pour retirer une certaine largeur de ladite matière, et en ce que l'on pose l'autre glace (2) sur ladite feuille (,3') ainsi découpée, l'ensemble étant ensuite laminé et étuvé.

14. Procédé de fabrication d'une vitre conforme à l'une quelconque des revendications 9 à 11, caractérisé en ce que l'on pratique dans une feuille de matière synthétique (3') constituant un adhésif double face, une ligne de découpe (4') selon ledit contour de préouverture souhaité pour retirer une certaine largeur de ladite matière, en ce que l'on colle cette feuille (3') sur l'une (1) desdites glaces, et en ce que l'on pose l'autre glace (2) sur ladite feuille ainsi découpée, l'ensemble étant ensuite laminé et étuvé.
